# FASCICULE DE BREVET EUROPEEN

(11) **EP 1 241 682 B1**
(45) Date de publication et mention de la délivrance du brevet: **26.11.2008**
(21) Numéro de dépôt: 02290400.7
(22) Date de dépôt: 19.02.2002
(51) Int. Cl.: G21C 15/243

(54) **Pompe primaire de centrale nucléaire**
Kernkratwerkkühlmittelpumpe
Nuclear reactor coolant pump

(30) Priorité: 12.03.2001 FR 0103335
(43) Date de publication de la demande: 18.09.2002
(73) Titulaire: JEUMONT S.A., 92400 Courbevoie (FR)
(72) Inventeur: Mazuy, Louis, 59600 Maubeuge (FR)
(74) Mandataire: Jacobson, Claude

(56) Documents cités:
- EP-A- 0 018 266
- DE-A- 2 013 963
- DE-B- 1 017 320
- FR-A- 1 038 026
- FR-A- 2 384 971
- FR-A- 2 647 854

## Description

La présente invention concerne une pompe primaire de centrale nucléaire.

Les pompes primaires de centrale nucléaire comprennent un arbre d'entraînement en rotation d'une roue et, au-dessus de ladite roue et concentriquement audit arbre, un échangeur de chaleur formant une barrière thermique, un couvercle de barrière thermique comportant une jupe périphérique munie à sa base d'un fond circulaire s'étendant au-dessous de l'échangeur de chaleur et un diffuseur de pompe comportant une jupe périphérique concentrique à ladite jupe périphérique du couvercle de barrière thermique et munie à sa base d'une couronne s'étendant au-dessous du fond circulaire dudit corps.

Ce type de pompe primaire comprend également un anneau appelé anneau de labyrinthe disposé entre l'échangeur de chaleur et l'arbre, ainsi qu'un corps sur lequel sont fixés l'échangeur de chaleur et la jupe périphérique du couvercle de barrière thermique. Ce corps est relié au couvercle de barrière thermique par des éléments de liaison.

Jusqu'à présent, le fond circulaire du couvercle de barrière thermique s'étend juste au-dessous de la partie inférieure de l'échangeur de chaleur et ménage avec la couronne du diffuseur une chambre inférieure d'eau froide.

De plus, la couronne du diffuseur comporte un alésage central de passage de l'arbre muni d'une succession d'anneaux circonférenciels et superposés formant un joint à lèvres du type labyrinthe.

Cette disposition présente des inconvénients.

En effet, la couronne du diffuseur portant le joint à lèvres du type labyrinthe est disposée dans la zone de transition entre l'eau chaude du circuit primaire qui est à une température de l'ordre de 300°C et la zone refroidie de la pompe qui est à une température d'environ 40°C.

La couronne du diffuseur et de ce fait le joint du type labyrinthe sont soumis à un important gradient thermique qui favorise la formation de fissures de fatigue thermique sur les lèvres de ce joint.

L'invention a pour but d'éviter ces inconvénients en proposant une pompe primaire de centrale nucléaire dans laquelle la répartition des températures au niveau du joint à lèvres du type labyrinthe entre l'eau chaude du circuit primaire et la zone refroidie est modifiée de façon à réduire la formation de fissures dans ce joint.

L'invention a donc pour objet une pompe primaire de centrale nucléaire, du type comprenant, d'une part, un arbre d'entraînement en rotation d'une roue et, au-dessus de ladite roue et concentriquement audit arbre, un échangeur de chaleur formant une barrière thermique, un couvercle de barrière thermique comportant une jupe périphérique munie à sa base d'un fond circulaire s'étendant au-dessous de l'échangeur de chaleur et un diffuseur comportant une jupe périphérique munie à sa base d'une couronne s'étendant au-dessous du fond circulaire du couvercle de barrière thermique et, d'autre part, un corps sur lequel sont fixés l'échangeur de chaleur et la jupe périphérique du couvercle de barrière thermique, caractérisée en ce que le fond circulaire du couvercle de barrière thermique ménage avec la base de l'échangeur de chaleur une chambre inférieure d'eau froide et comporte un alésage central muni d'une succession d'anneaux circonférenciels et superposés formant un joint à lèvres du type labyrinthe et en ce que le fond circulaire et la jupe périphérique du couvercle de barrière thermique et la couronne et la jupe périphérique du diffuseur ménagent entre eux un jeu formant un espace de maintien d'un fluide de refroidissement stagnant.

Selon d'autres caractéristiques de l'invention :
- le fond circulaire comporte des nervures verticales séparant la chambre inférieure en plusieurs compartiments,
- l'extrémité libre de chaque nervure comporte un lamage et l'ensemble de ces lamages forme un secteur circulaire de centrage d'un anneau disposé entre l'arbre et l'échangeur de chaleur,
- un joint d'étanchéité est interposé entre le bord supérieur de la jupe périphérique du couvercle de barrière thermique et le corps,
- le fond circulaire du couvercle de barrière thermique comporte, entre l'alésage et la jupe périphérique, une zone de plus faible épaisseur.

Les caractéristiques et avantages de l'invention apparaîtront au cours de la description qui va suivre, donnée à titre d'exemple et faite en référence aux dessins annexés, sur lesquels :
- la Fig. 1 est une demi-vue schématique en coupe axiale d'une partie d'une pompe primaire conforme à l'invention,
- la Fig.2 est une vue en coupe selon la ligne 2-2 de la Fig.1.

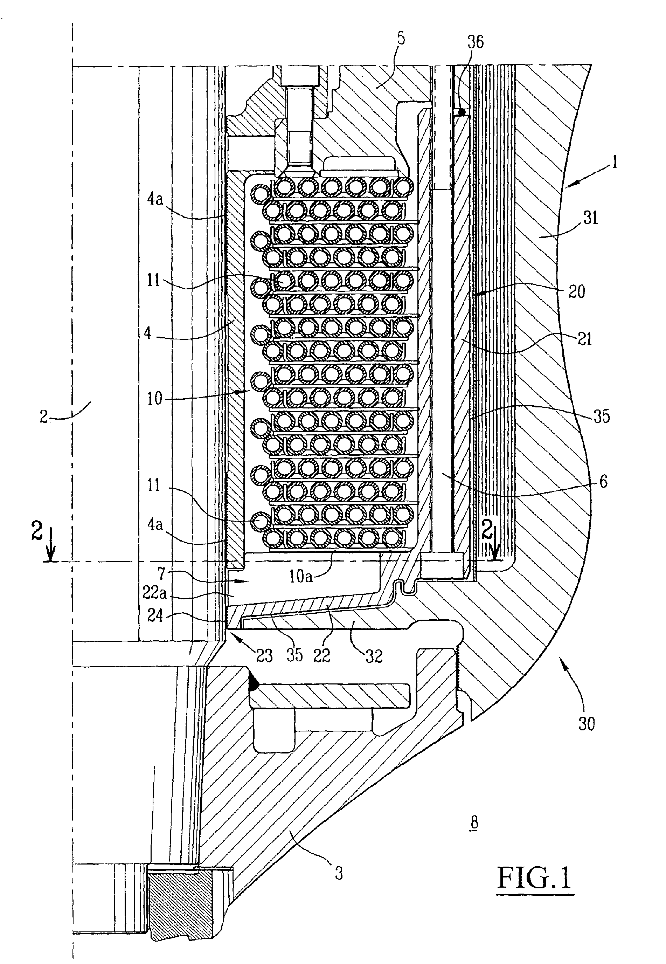

Sur la Fig. 1, on a représenté schématiquement une partie d'une pompe primaire d'une centrale nucléaire et qui est une pompe de type hélico centrifuge à un étage, à aspiration verticale et refoulement horizontal.

Cette pompe désignée par la référence générale 1 comprend un arbre 2 d'entraînement en rotation d'une roue 3 fixée par des moyens appropriés à la base dudit arbre 2. Cette pompe 1 comprend également, au-dessus de la roue 3 et concentriquement à l'arbre 2, un échangeur de chaleur 10 formant une barrière thermique, un couvercle de barrière thermique 20 et un diffuseur 30.

L'échangeur de chaleur 10 est composé d'une multitude de tubes 11 concentriques et répartis selon des nappes superposées et un anneau 4 est disposé entre l'arbre 2 et l'échangeur de chaleur 10.

Cet anneau 4 comporte intérieurement, respectivement à sa partie supérieure et à sa partie inférieure, un joint mécanique 4a de type labyrinthe.

Le couvercle de barrière thermique 20 est formé par une jupe périphérique 21 s'étendant sur toute la hauteur de l'échangeur de chaleur 10 et munie à sa base d'un fond circulaire 22 s'étendant au-dessous dudit échangeur de chaleur 10.

Le diffuseur 30 est formé par une jupe périphérique 31 entourant la jupe périphérique 21 du couvercle de barrière thermique 20 et munie à sa base d'une couronne 32 s'étendant au-dessous du fond circulaire 22 dudit couvercle de barrière thermique 20.

La pompe primaire 1 comprend également un corps 5 sur lequel sont fixés l'échangeur de chaleur 10 et la jupe périphérique 21 du couvercle de barrière thermique 20.

La jupe 21 du couvercle de barrière thermique 20 est fixée sur le corps 5 par des éléments de liaison 6 constitués par exemple par des goujons.

Ainsi que représenté sur la Fig. 1, le fond circulaire 22 du corps de barrière thermique 20 ménage avec la base 10a de l'échangeur de chaleur 10, une chambre inférieure d'eau froide désignée dans son ensemble par la référence 7.

Le fond circulaire 22 du corps de barrière thermique 20 est pourvu d'un alésage central 23 de passage de l'arbre 2 et qui comporte une succession d'anneaux circonférenciels et superposés formant un joint à lèvres 24 du type labyrinthe.

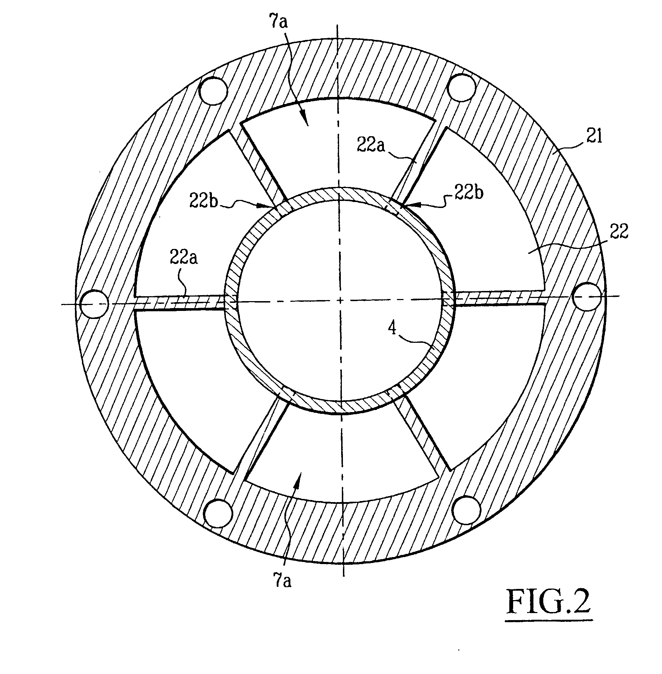

De plus, le fond circulaire 22 comporte des nervures 22a verticales (Fig.2) dirigées vers l'échangeur de chaleur 10. Ces nervures 22a sont disposées de façon rayonnante et équidistante et séparent la chambre 7 en plusieurs compartiments 7a.

L'extrémité libre de chaque nervure 22a comporte un lamage 22b et l'ensemble de ces lamages 22b forme un secteur circulaire destiné à recevoir l'extrémité inférieure de l'anneau 4 et à assurer le centrage de cet anneau 4.

Enfin, les nervures 22a assurent au fond circulaire 22 une résistance à la flexion.

Par ailleurs, le fond circulaire 22 et la jupe périphérique 21 du couvercle de barrière thermique 20 d'une part et la couronne 32 et la jupe périphérique 31 du diffuseur 30 d'autre part, ménagent entre eux un jeu formant un espace 35 de maintien d'un fluide de refroidissement stagnant.

Un joint d'étanchéité 36 est interposé entre le bord supérieur de la jupe périphérique 21 du couvercle de barrière thermique 20 et le corps 5 de façon à éviter une intrusion d'eau chaude dans l'échangeur de chaleur 10 pendant le fonctionnement normal et également au cours de l'arrêt et du démarrage de la pompe et aussi en cas de coupure de l'alimentation de la pompe en eau froide.

Selon une variante, le fond circulaire 22 du couvercle de barrière thermique 20 comporte, entre l'alésage 23 et la jupe périphérique 21, une zone de plus faible épaisseur, non représentée.

De manière classique, la roue 3 solidaire en rotation de l'arbre 2 aspire le fluide du circuit primaire et ce fluide est évacué par un orifice de refoulement 8 dont une partie est représentée sur la Fig. 1 et qui est situé sur le côté du diffuseur 30.

Ce diffuseur 30 est donc en contact avec le fluide du circuit primaire qui est à une température de l'ordre de 300°C.

L'échangeur de chaleur 10 formant une barrière thermique et une alimentation en eau froide limite la transmission de chaleur provenant de l'eau chaude du circuit primaire et la température de l'eau dans la chambre inférieure 7 est de l'ordre de 40°C.

Grâce à cette répartition des températures aux alentours du joint à lèvres 24 et à la réalisation de ce joint directement sur le fond du couvercle de barrière thermique 20 qui est isolé du diffuseur 30 en contact avec l'eau chaude du circuit primaire, les risques de formation de fissures sur les anneaux de ce joint 24 sont considérablement réduits.

Ces modifications assurent un gain très important sur les valeurs du facteur d'intensité des contraintes lors des sollicitations maximales subies par le joint à lèvres du type labyrinthe.

A titre d'exemple, la valeur maximale calculée pour les pompes utilisées dans les centrales nucléaires de 1300 MW est inférieure au tiers du critère habituel à respecter pour le matériau utilisé.

## Revendications

1. Pompe primaire de centrale nucléaire, du type comprenant, d'une part, un arbre (2) d'entraînement en rotation d'une roue (3) et, au-dessus de ladite roue (3) et concentriquement audit arbre (2), un échangeur de chaleur (10) formant une barrière thermique, un couvercle de barrière thermique (20) comportant une jupe périphérique (21) munie à sa base d'un fond (22) circulaire s'étendant au-dessous de l'échangeur de chaleur (10) et un diffuseur (30) comportant une jupe périphérique (31) munie à sa base d'une couronne (32) s'étendant au-dessous du fond (22) circulaire du couvercle de barrière thermique (20) et, d'autre part, un corps (5) sur lequel sont fixés l'échangeur de chaleur (10) et la jupe périphérique (21) du couvercle de barrière thermique (20), **caractérisée en ce que** le fond (22) circulaire du couvercle de barrière thermique (20) ménage, avec la base (10a) de l'échangeur de chaleur (10), une chambre inférieure (7) d'eau froide et comporte un alésage central (23) muni d'une succession d'anneaux circonférenciels et superposés formant un joint à lèvres (24) du type labyrinthe et **en ce que** le fond (22) circulaire et la jupe périphérique (21) du couvercle de barrière thermique (20) et la couronne (32) et la jupe périphérique (31) du diffuseur (30) ménagent entre eux un jeu formant un espace (35) de maintien d'un fluide de refroidissement stagnant.

2. Pompe primaire selon la revendication 1, **caractérisée en ce que** le fond circulaire (22) comporte des nervures (22a) verticales séparant la chambre inférieure (7) en plusieurs compartiments (7a).

3. Pompe primaire selon la revendication 2, **caractérisée en ce que** l'extrémité libre de chaque nervure (22a) comporte un lamage (22b) et **en ce que** ces lamages forment un secteur circulaire de centrage d'un anneau (4) disposé entre l'arbre (1) et l'échangeur de chaleur (10).

4. Pompe primaire selon la revendication 1, **caractérisée en ce qu'**un joint d'étanchéité (36) est interposé entre le bord supérieur de la jupe périphérique (21) du couvercle de barrière thermique (20) et le fond du corps (5).

5. Pompe primaire selon la revendication 1, **caractérisée en ce que** le fond (22) circulaire du couvercle de barrière thermique (20) comporte, entre l'alésage (23) et la jupe périphérique (21), une zone de plus faible épaisseur.

## Claims

1. Nuclear power plant primary coolant pump of the type comprising on one hand, a drive shaft (2) rotating a wheel (2) and, above the said wheel (3) and concentrically with the said shaft (2), a heat exchanger (10) forming a thermal barrier, a thermal barrier cover (2), comprising a peripheral skirt (21) provided at its base with a circular bottom (22) extending below the heat exchanger (1) and a diffuser (30) comprising a peripheral skirt (31) provided at its base with a crown (32) extending below the circular base (22) of the thermal barrier (20) cover and, on the other hand, a body (5) on which the heat exchanger and the peripheral skirt (21) of the thermal barrier (20) cover are fixed, **characterised in that** the circular base (22) of the thermal barrier (20) cover houses, with the base (10a) of the heat exchanger (10), a lower cold water box (7) and comprises a central bore (23) equipped with a succession of circumferential and superimposed rings forming a labyrinth type lip seal (24) and **in that** the circular bottom (22) and the peripheral skirt (21) of the thermal barrier (20) cover and the crown (32) and the peripheral skirt (31) of the diffuser (30) house between them a gap forming a stagnant cooling fluid holding space (35).

2. Primary coolant pump according to claim 1 **characterised in that** the circular bottom (22) comprises vertical ribs (22a) separating the lower box (7) into several compartments (7a).

3. Primary coolant pump according to claim 2 **characterised in that** the free end of each rib (22a) comprises an end facing (22b) and **in that** these end faces form a circular centring sector of a ring (4) placed between the shaft (1) and the heat exchanger (10).

4. Primary coolant pump according to claim 1 **characterised in that** a seal (36) is interposed between the upper edge of the peripheral skirt (21) of the thermal barrier (20) cover and the bottom of body (5).

5. Primary coolant pump according to claim 1 **characterised in that** the circular bottom (22) of the thermal barrier (20) cover comprises, between the bore (23) and the peripheral skirt (21), a zone of a lesser thickness.

## Patentansprüche

1. Kernkraftwerk-Primärpumpe des Typs, der umfasst: einerseits eine Rotationsantriebswelle (2) eines Rads (3) und, über dem genannten Rad (3) und konzentrisch zu der genannten Welle (2), einen eine Thermobarriere bildenden Wärmetauscher (10), ein einen peripheren Mantel (21) umfassendes Thermobarrierengehäuse (20) mit - an seiner Basis - einem sich unter dem Wärmetauscher (10) erstreckenden kreisförmige Boden (22) und einen Diffusor (30) mit einem peripheren Mantel (31) mit - an seiner Basis - einem sich unter dem kreisförmigen Boden (22) des Thermobarrierengehäuses (20) erstreckenden Kranz (32), und andrerseits einen Körper (5), an dem der Wärmetauscher (10) und der periphere Mantel (21) des Thermobarrierengehäuses (20) befestigt sind,
**dadurch gekennzeichnet, dass** der kreisförmige Boden (22) des Thermobarrierengehäuses (20) zusammen mit der Basis (10a) des Wärmetauschers (10) eine untere Kaltwasserkammer (7) ausspart, die eine zentrale Bohrung (23) umfasst, ausgerüstet mit einer Folge übereinander angeordneter Umfangsringe, die eine Lippendichtung (24) des Labyrinth-Typs bilden, und **dadurch**, dass der kreisförmige Boden (22) und der periphere Mantel (21) des Thermobarrierengehauses (20) und der Kranz (32) und der periphere Mantel (31) des Diffusors (30) ein Spiel in Form eines Rückhalteraums (35) einer stagnierenden Kühlflüssigkeit aussparen.

2. Primärpumpe nach Anspruch 1, **dadurch gekennzeichnet, dass** der kreisförmige Boden (22) vertikale Rippen (22a) umfasst, die die untere Kammer (7) in mehrere Bereiche (7a) aufteilen.

3. Primärpumpe nach Anspruch 2; **dadurch gekennzeichnet, dass** das freie Ende jeder Rippe (22a) eine Senkung (22b) umfasst, und **dadurch**, dass diese Senkungen einen kreisformigen Sektor bzw. Kreissektor zur Zentrierung eines zwischen der Welle (1) und dem Wärmetauscher (10) angeordneten Rings (4) bilden.

4. Primärpumpe nach Anspruch 1, **dadurch gekennzeichnet, dass** zwischen dem oberen Rand des peripheren Mantels (21) dem Thermobarrierengehäuse (20) und der Unterseite des Körpers (5) eine Dichtung (36) eingesetzt ist.

5. Primärpumpe nach Anspruch 1, **dadurch gekennzeichnet, dass** der kreisförmige Boden (22) des Thermobarrierengehäuses (20) zwischen der Bohrung (23) und dem peripheren Mantel (21) eine Zone von geringerer Dicke umfasst.
